(19) Europäisches Patentamt

European Patent Office

Office européen des brevets

(11) **EP 1 562 247 A1**

(12) **EUROPEAN PATENT APPLICATION**

(43) Date of publication:
**10.08.2005 Bulletin 2005/32**

(51) Int Cl.⁷: **H01M 8/10**, H01M 4/86

(21) Application number: **05290194.9**

(22) Date of filing: **28.01.2005**

(84) Designated Contracting States:
**AT BE BG CH CY CZ DE DK EE ES FI FR GB GR HU IE IS IT LI LT LU MC NL PL PT RO SE SI SK TR**
Designated Extension States:
**AL BA HR LV MK YU**

(30) Priority: **30.01.2004  JP 2004022763**

(71) Applicant: **Mitsubishi Heavy Industries, Ltd.**
**Tokyo 108-8215 (JP)**

(72) Inventors:
- **Watanabe, Satoru, c/o Mitsubishi Heavy Ind. Ltd.**
  **Yokohama-shi Kanagawa (JP)**
- **Tsurumaki, Shigeru,**
  **c/o Mitsubishi Heavy Ind. Ltd.**
  **Hiroshima-shi, Hiroshima (JP)**
- **Ito, Hideki, c/o Mitsubishi Heavy Ind. Ltd.**
  **Hiroshima-shi, Hiroshima (JP)**

- **Yamada, Akihiko, c/o Mitsubishi Heavy Ind. Ltd.**
  **Yokohama-shi Kanagawa (JP)**
- **Yoshida, Hirohisa, c/o Mitsubishi Heavy Ind. Ltd.**
  **Hiroshima-shi, Hiroshima (JP)**
- **Sato, Akio, c/o Mitsubishi Heavy Ind. Ltd.**
  **Hiroshima-shi, Hiroshima (JP)**
- **Moriga, Takuya, c/o Mitsubishi Heavy Ind. Ltd.**
  **Hiroshima-shi, Hiroshima (JP)**
- **Yamada, Tamotsu, c/o Mitsubishi Heavy Ind. Ltd.**
  **Hiroshima-shi, Hiroshima (JP)**
- **Nojima, Shigeru, c/o Mitsubishi Heavy Ind. Ltd.**
  **Hiroshima-shi, Hiroshima (JP)**

(74) Representative: **Dronne, Guy et al**
**Cabinet Beau de Loménie,**
**158, rue de l'Université**
**75340 Paris Cedex 07 (FR)**

(54) **Fuel cell membrane electrode and fuel cell with radical removing material**

(57) A fuel cell membrane electrode having a cathode catalyst layer on one surface of a polymer electrolyte membrane, and an anode catalyst layer on the other surface of the membrane, the cathode catalyst layer being supplied with an oxygen-containing gas, and the anode catalyst layer being supplied with a hydrogen-containing gas, and characterized in that an active oxygen removing layer containing an active oxygen removing material is provided on at least one of interfaces between the membrane and the catalyst layers coated on both surfaces of the membrane, and the active oxygen removing material is $Co_3O_4$, $Sb_2O_4$, activated carbon, or a solid acid catalyst; and a fuel cell using the membrane electrode.

**Description**

Technical Field

This invention relates to a fuel cell membrane electrode, and a fuel cell using it. More particularly, the invention relates to a technology preferred as a membrane electrode for a polymer electrolyte fuel cell.

Background Art

In recent years, increased attention has been paid to global environmental problems. Against this background, polymer electrolyte fuel cells (PEFC's) are coming to the fore as low-pollution methods which can produce energy efficiently and cleanly. Their application as power sources in a wide range of fields is expected.

Generally, in the body of the polymer electrolyte fuel cell, supplied hydrogen becomes protons in an anode electrode. The resulting protons move and diffuse within a polymer membrane, and react with supplied oxygen in a cathode electrode to form water. During this process, electrons move through an external line connecting the electrodes, providing electric energy. It is necessary to supply a hydrogen gas, as a fuel, to the anode electrode, and an oxygen-containing gas to the cathode electrode. The electrode reaction of the fuel cell body is expressed by the following chemical equations:

$$\text{Anode electrode (H}_2 \text{ supply side): } H_2 \rightarrow 2H^+ + 2e^- \tag{1}$$

$$\text{Cathode electrode (O}_2 \text{ supply side) : } O_2 + 4H^+ + 4e^- \rightarrow 2H_2O \tag{2}$$

$$\text{Entire cell: } 2H_2 + O_2 \rightarrow 2H_2O \tag{3}$$

In the actual fuel cell, side reactions occur in addition to these predominant electrode reactions to form hydrogen peroxide ($H_2O_2$), for example. The formation of hydrogen peroxide is assumed to be ascribed to the incomplete reduction reaction of oxygen in the cathode electrode (cathode catalyst layer), where hydrogen peroxide occurs as shown by the reaction formula (a factor is not considered) indicated below. This hydrogen peroxide forms radicals (·OH), which cause breakage of the membrane, under the influence of $Fe^{2+}$, $Cu^+$, etc. flowing out of piping or the like. The radicals generated by this electrode reaction deteriorate the solid polymer membrane electrolyte.

$$O_2 + 2H^+ + 2e^- \rightarrow H_2O_2 \rightarrow \cdot OH \tag{4}$$

These phenomena tend to be curbed if the membrane is wetted, whereas the membrane is prone to be damaged if the polymer membrane is dry. Thus, such problems have hitherto been dealt with often, for example, by operating the cell under highly humidified conditions, without greatly improving the membrane electrode itself. By so doing, the generation of radicals is suppressed to lengthen the life of the cell. However, low-humidified conditions are preferred for the increased efficiency of the fuel cell system.

Solutions by the improvement of the polymer membrane itself are also under consideration. Examples of the solutions are the incorporation of a hydrogen peroxide decomposition catalyst into the catalyst layer, and the incorporation of a hydrogen peroxide decomposition catalyst between the catalyst layer and the polymer membrane. As the hydrogen peroxide decomposition catalyst, an oxide catalyst or an alloy catalyst is used (see, for example, Japanese Patent Application Laid-Open No. 2000-106203).

If the polymer electrolyte fuel cell, for example, is operated for a long period, however, the mere addition of the oxide catalyst or the like has proved to be an insufficient measure for preventing the deterioration of the membrane electrolyte by radicals generated by the electrode reaction.

One of the reasons maybe the influence of crossover oxygen or crossover hydrogen, i.e., oxygen or hydrogen passing through the membrane, in addition to the generation of radicals by the side reaction associated with the electrode reaction in the fuel cell. This reaction can occur in either of the anode electrode and the cathode electrode.

With the polymer electrolyte fuel cell, trace amounts of hydrogen and oxygen passing through the membrane are existent, even when a reliable polymer membrane is used. A hydrogen gas, in particular, has a small molecular size, and thus can pass through the polymer membrane and leak to the cathode electrode. This phenomenon of leakage is called crossover, and crossover oxygen and crossover hydrogen are present in connection with supplied oxygen and hydrogen, respectively. When this phenomenon takes place, radicals and active oxygen are produced in large amounts as by-products, because hydrogen and oxygen undergo a combustion reaction as shown by the reaction formula (5) indicatedbelow (a coefficient is not considered). These by-products are expected to damage the polymer electrolyte membrane, causing voltage drop or membrane breakage. This results in the major problems that larger amounts of hydrogen and oxygen pass through the damaged sites, promoting the combustion reaction to accelerate membrane damage, and leads to poor cell performance, disabling power generation in the worst case.

$$H_2 + O_2 \rightarrow H_2O_2, \cdot OH \tag{5}$$

(predominant reaction: $2H_2 + O_2 \rightarrow 2H_2O$)

Summary of the Invention

In the light of the foregoing problems, the inventors diligently conducted studies in an attempt to develop a membrane electrode, which does not deteriorate during a long-term operation under low-humidified conditions, in a polymer electrolyte fuel cell. The substances, which are generated by crossover hydrogen and oxygen, as well as the electrode reaction, to deteriorate the polymer electrolyte, may be active oxygen and radicals with a highly oxidizing power, such as the aforementioned hydrogen peroxide and hydroxy radicals. The above-mentioned studies have led to the discovery that an active oxygen removing layer is disposed on at least one of catalyst layers on a polymer electrolyte membrane, or an active oxygen removing material is incorporated into at least one of such catalyst layers, whereby the electrolyte can be effectively prevented from being deteriorated by active oxygen (radicals) ascribed to a combustion reaction between crossover hydrogen and oxygen, or active oxygen (radicals) resulting from by-products of an electrode reaction. The present invention has been accomplished based on this finding.

The present invention is designed to improve the durability of a polymer electrolyte and a membrane by adding a substance, which captures, decomposes and removes the resulting radicals, into a membrane electrode (catalyst layer/electrolyte membrane interface, catalyst layer).

According to a first aspect of the present invention, there is provided a fuel cell membrane electrode having a cathode catalyst layer on one surface of a polymer electrolyte membrane, and an anode catalyst layer on the other surface of the polymer electrolyte membrane, the cathode catalyst layer being supplied with an oxygen-containing gas, and the anode catalyst layer being supplied with a hydrogen-containing gas, and characterized in that an active oxygen removing layer containing an active oxygen removingmaterial is provided on at least one of interfaces between the membrane and the catalyst layers coated on both surfaces of the membrane, and the active oxygen removing material is $Co_3O_4$, $Sb_2O_4$, activated carbon, or a solid acid catalyst. The active oxygen removing layer maybe provided, for example, on the interface between the membrane and the cathode catalyst layer. The active oxygen removing material can be contained in at least one of the catalyst layers. For example, the active oxygen removing material can be contained in the cathode catalyst layer.

According to a second aspect of the present invention, there is provided a fuel cell membrane electrode having a cathode catalyst layer on one surface of a polymer electrolyte membrane, and an anode catalyst layer on the other surface of the polymer electrolyte membrane, the cathode catalyst layer being supplied with an oxygen-containing gas, and the anode catalyst layer being supplied with a hydrogen-containing gas, and characterized in that an active oxygen removing material is contained in at least one of the catalyst layers coated on both surfaces of the membrane, and the active oxygen removing material is $Co_3O_4$, $Sb_2O_4$, activated carbon, or a solid acid catalyst. For example, it is preferred that the active oxygen removing material is contained in the cathode catalyst layer.

In each of the above-mentioned aspects of the present invention, a solid acid catalyst can be used as the active oxygen removing material. Usually, the solid acid catalyst may have 0.1 mmol/g or more, preferably 0.3 mmol/g or more, of acid sites. Since the acid sites have the ability to neutralize radicals, the solid acid catalyst is particularly preferred for decreasing or removing radicals ascribed to the combustion reaction between crossover hydrogen and oxygen.

$TiO_2$, $SiO_2$, $ZrO_2$, $Al_2O_3$, $WO_3$, niobic acid, or a compound oxide containing at least one of these compounds, or activated carbon may be named as a preferred example of the solid acid catalyst. The active oxygen removing material maybe activated carbon, the solid acid catalyst, $Co_3O_4$, or $Sb_2O_4$ having an electrode catalyst (or electrocatalyst) metal, such as Pt or PtRu, carried thereon. Any of these active oxygen removing materials is effective, particularly, against deterioration under dry conditions, but of course, shows its effect even under wet conditions.

Moreover, the active oxygen removing layer can be composed of a mixture of such active oxygen removing material and a cation exchange polymer (for example, Nafion).

According to the present invention, there can also be provided a fuel cell composed of a stack of cells, each of the cells comprising the aforementioned fuel cell membrane electrode, gas diffusion layers sandwiching the membrane electrode and comprising a conductive porous material, and separators disposed outwardly of the gas diffusion layers and having gas supply grooves.

As the oxygen-containing gas, wide varieties of gases containing oxygen can be used. Generally, air or 100% compressed-gas cylinder oxygen is used. As the hydrogen-containing gas, wide varieties of gases containing hydrogen can be used. Generally, fuel reformed gas, or 100% compressed-gas cylinder hydrogen is used. The dry hydrogen concentration of the fuel reformed gas is of the order of 20 to 80%.

In connection with the construction of the membrane electrode of the polymer electrolyte fuel cell, the present invention is arranged to provide the active oxygen removing layer between the polymer membrane and the electrocatalyst layer, or to incorporate the active oxygen removing material into the electrocatalyst layer. By so doing, the present invention provides the membrane electrode in which the polymer electrolyte or membrane is not deteriorated by radicals generated by by-products from power generation, or crossover.

According to the membrane electrode of the present invention, the polymer electrolyte can be inhibited for a long term from being deteriorated by active oxygen (radicals) due to the combustion reaction between crossover hydrogen and oxygen, or active oxygen (radicals) due to by-products of the electrode reaction. If this membrane electrode is used in a solid polymer electrolyte fuel cell, the durability of the cell is markedly improved. Furthermore, the operation of the fuel cell under low humidification conditions can be performed, and the system efficiency is increased.

Brief Description of the Drawing

The present invention will become more fully understood from the detailed description given hereinbelow and the accompanying drawing which is given by way of illustration only, and thus is not limitative of the present invention, and wherein:

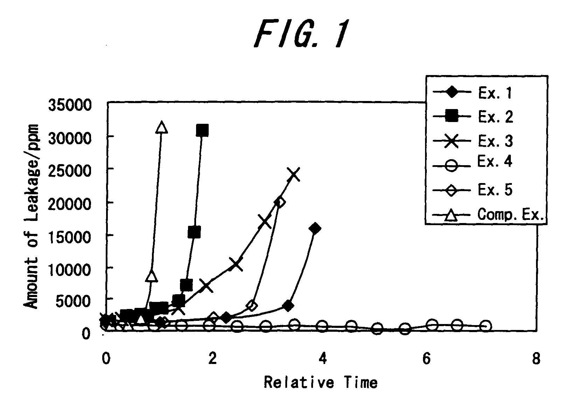

FIG. 1 is a graph showing the results of durability tests of component cells of a fuel cell (hereinafter referred to as fuel cell component cells) in Examples 1 to 5.

Detailed Description

A fuel cell membrane electrode according to the present invention will now be described in detail by embodiments, which in no way limit the invention.

The fuel cell membrane electrode of the present invention comprises a polymer electrolyte membrane, a cathode catalyst layer provided on one surface of the polymer electrolyte membrane for being supplied with an oxygen-containing gas, and an anode catalyst layer provided on the other surface of the polymer electrolyte membrane for being supplied with a hydrogen-containing gas.

According to a first embodiment of the present invention, an active oxygen removing layer containing an active oxygen removing material is provided on at least one of interfaces between the polymer electrolyte membrane and the catalyst layers coated on both surfaces of the polymer electrolyte membrane. The active oxygen removing material is $Co_3O_4$, $Sb_2O_4$, activated carbon, or a solid acid catalyst. In the present embodiment, the active oxygen removing layer is provided on the interface between the aforementioned membrane and the cathode catalyst layer.

If a hydrogen gas supplied to an anode electrode crosses over the membrane, this hydrogen gas is present in a cathode electrode as crossover hydrogen, which undergoes a combustion reaction with oxygen supplied to the cathode electrode. Products formed during this process are mostly water molecules, but also include active oxygen (radicals) generated according to the following equations (no factor is considered):

$$H_2 + O_2 \rightarrow H_2O_2 \rightarrow \cdot OH \qquad (6)$$

Active oxygen is considered to include $H_2O_2$ and hydroxy radicals. Details remain unknown as to whether hydroxy radicals are directly formed, or they are formed via hydrogen peroxide, in the reactions of the above equations (6). However, it is speculated that hydroxy radicals formed from hydrogen peroxide in the presence of iron ions, etc. deteriorate the membrane. Such hydroxy radicals and $H_2O_2$ are generically expressed as active oxygen.

Active oxygen attributable to the reaction equations (6) decomposes the polymer electrolyte membrane. Particularly if metal ions, such as iron ions, are present in hydrogen peroxide, hydroxy radicals with a very strong oxidizing power are generated (Fenton reaction). These hydroxy radicals are assumed to perform the decomposition of the polymer electrolyte membrane. Particularly if the membrane electrode is dry, deterioration of the membrane is marked.

In the present embodiment, therefore, the active oxygen removing layer is provided on the interface between the membrane and the cathode catalyst layer. The radicals are attenuated under the action of the active oxygen removing material to prevent the deterioration of the membrane. The active oxygen removing layer has the active oxygen removing material contained, for example, in a polymer. The content of the active oxygen removing material is not limited, but needs to be such an amount as not to impair the conductivity of protons between the polymer electrolyte membrane and the electrocatalyst layer. Concretely, the active oxygen removing material is contained in an amount of, usually, 10 to 90% by volume, and preferably, 20 to 60% by volume. As the polymer to serve as a matrix, a cation exchange polymer, for example, is used preferably.

As the active oxygen removing material, $Co_3O_4$, $Sb_2O_4$, activated carbon, or a solid acid catalyst is used. An electrocatalyst metal, such as Pt, may be carried on any of these active oxygen removing materials.

Activated carbon is preferred as the active oxygen removing material, because it has the effect of suppressing the activity of radicals as does the solid acid catalyst, and it also has the effects of adsorbing active oxygen and adsorbing and removing a substance (e.g., iron ions) having the catalytic action of converting hydrogen peroxide into radicals.

The preferred solid acid catalyst is a compound having, normally, 0.1 mmol/g or more, preferably 0.3 mmol/g or more, of acid sites. The upper limit of the content of the acid sites is not limited, but generally, the compound having an acid site content of the order of 10 mmol/g sets an upper limit for this type of compound. By so using a catalyst having a certain content or higher of acid sites, the activity of the resulting radicals can be effectively suppressed. Nor is any limitation imposed on the nature of the solid acid catalyst, but a powdery solid acid catalyst, in particular, is preferred.

The preferred example of the solid acid catalyst is $TiO_2$, $SiO_2$, $ZrO_2$, $Al_2O_3$, $WO_3$, niobic acid, or a compound oxide containing at least one of these compounds.

Generally, an oxide of small metal ions having a higher oxidation number shows stronger solid acidity, while an oxide of large metal ions having a lower oxidation number shows stronger basicity. A metal oxide, such as $TiO_2$ or $Al_2O_3$, is acidic if the electron density on the oxygen atom (O) decreases, and basic if the electron densityon the oxygen atom (O) increases. As the catalyst for use in the present invention, therefore, the mere use of ametal oxide such as $TiO_2$ or $Al_2O_3$ is not sufficient, but the use of a solid acid catalyst having a certain content or higher of acid sites is essential.

Aside from the solid acid catalyst, $Co_3O_4$ or $Sb_2O_4$ can be caused to act as a catalyst for removing active oxygen by its oxidation and reduction reactions, regardless of its acid sites. Each of these components is oxidized with radicals to a higher-order oxide through a series of reactions indicated below. Then, the higher-order oxide is restored to the original reduced compound under a predetermined power generation voltage.

$$\text{(Radical generation) } H_2 + O_2 \rightarrow 2\cdot OH$$

$$\text{(Oxidation with radicals) } \cdot OH + Co_3O_4 \rightarrow Co_2O_3 \ (Sb_2O_4 \rightarrow$$

$$Sb_2O_5)$$

$$\text{(Reduction with electric field) } Co_2O_3 + e^- \rightarrow Co_3O_4$$

Thus, the polymer electrolyte membrane is coated with, for example, a mixture of $Co_3O_4$ or $Sb_2O_4$ and a polymer such as Nafion, whereby an active oxygen removing layer can be formed. The nature of $Co_3O_4$ or $Sb_2O_4$ is not limited, but that in a powdery form, in particular, is preferred.

As described above, the active oxygen removing layer is provided on the interface between the membrane and the cathode catalyst layer. As a result, radicals, which are generated by crossover hydrogen passing through the membrane in a trace amount from the anode electrode side, are decreased by the action of the active oxygen removing material, whereby deterioration of the membrane can be prevented.

The same action as that performed in the above embodiment can be achieved by incorporating an active oxygen removing material into the cathode catalyst layer coated on one surface of the polymer electrolyte membrane. As the active oxygen removing material, $Co_3O_4$, $Sb_2O_4$, activated carbon, or a solid acid catalyst can be used similarly to the above-described active oxygen removing material.

The content of the active oxygen removing material in the catalyst layer is not limited. However, if electrocatalyst metal-carried carbon is used, for example, the volume ratio of carbon/active oxygen removing material is 1:0.1

~ 1:10, preferably 1:0.5 ~ 1:1.5. Alternatively, the content of the active oxygen removing material in the catalyst layer is normally 5 to 60% by volume, preferably 10 to 50% by volume, more preferably 15 to 40% by volume.

The metal component incorporated into each catalyst layer may be in, but is not limited to, a mode of containing Pt, or a mode of containing Pt and another active metal, such as Ru or Mo, particularly for the anode catalyst. Electrocatalyst layer components other than the active oxygen removing material are composed of an electrocatalyst, which has the active metal comprising Pt, or a Pt component and other active metal component, supported on a carrier of carbon or the like, and a cation exchange resin.

According to another embodiment of the present invention, the active oxygen removing layer is provided on the interface between the polymer electrolyte membrane and the anode catalyst layer. Consequently, radicals are decreased by the action of the active oxygen removing material, whereby deterioration of the membrane can be prevented.

If an oxygen gas supplied to the cathode electrode crosses over the membrane, this oxygen gas is present in the anode electrode as crossover oxygen, which undergoes a combustion reaction with hydrogen supplied to the anode electrode. During this process, active oxygen (radicals) is generated in the same manner as stated above.

In the present embodiment, therefore, the active oxygen removing layer is provided on the interface between the membrane and the anode catalyst layer. The active oxygen removing layer has the active oxygen removing material contained, for example, in a polymer. The content of the active oxygen removing material is not limited, but needs to be such an amount as not to impair the conductivity of protons between the polymer electrolyte membrane and the electrocatalyst layer. Concretely, the active oxygen removing material is contained in an amount of, usually, 10 to 90% by volume, and preferably, 20 to 60% by volume. As the polymer to serve as a matrix, a cation exchange polymer, for example, is used preferably.

As the active oxygen removing material, $Co_3O_4$, $Sb_2O_4$, activated carbon, or a solid acid catalyst is used. An electrocatalyst metal, such as Pt or PtRu, may be carried on any of these active oxygen removing materials.

The same action as that performed in the above embodiment can be achieved by incorporating an active oxygen removing material into the anode catalyst layer coated on one surface of the polymer electrolyte membrane. As the active oxygen removing material, $Co_3O_4$, $Sb_2O_4$, activated carbon, or a solid acid catalyst can be used similarly to the above-described active oxygen removing material.

The content of the active oxygen removing material in the catalyst layer is not limited. However, if electrocatalyst metal-carried carbon is used, for example, the volume ratio of carbon/active oxygen removing material is 1:0.1 ~ 1:10, preferably 1:0.5 ~ 1:1.5. Alternatively, the content of the active oxygen removing material in the catalyst layer is normally 5 to 60% by volume, preferably 10 to 50% by volume, more preferably 15 to 40% by volume. Electrocatalyst layer components other than the active oxygen removing material are composed of, for example, PtRu-carried carbon black, and a cation exchange resin.

According to the present invention, further actions and effects can be obtained by arbitrarily combining the above-described embodiments. That is, the active oxygen removing layer can be provided on each of the interface between the polymer electrolyte membrane and the cathode catalyst layer, and the interface between the polymer electrolyte membrane and the anode catalyst layer. In combination with these further embodiments, the active oxygen removing material can be incorporated into both of the cathode catalyst layer and the anode catalyst layer, or one of the cathode catalyst layer and the anode catalyst layer. Alternatively, it is possible to incorporate the active oxygen removing material into both of the cathode catalyst layer and the anode catalyst layer, or one of the cathode catalyst layer and the anode catalyst layer, without providing the active oxygen removing layer.

In any of the foregoing embodiments, radicals can be decreased by the action of the active oxygen removing material to prevent the deterioration of the polymer electrolyte and the membrane effectively.

Various methods can be used in adding the active oxygen removing material. In providing the active oxygen removing layer on the electrolyte membrane/catalyst layer interface, for example, a mixture slurry of a polymer electrolyte and the active oxygen removing material is prepared with the use of a polymer electrolyte solution, and coated onto the polymer membrane, for the purpose of ensuring proton conductivity. In incorporating the active oxygen removing material into the catalyst layer, the active oxygen removing material is mixed with a slurry for the catalyst layer, which is used for usual membrane electrode preparation, and the resulting mixture is coated onto the polymer membrane in the usual manner.

As a catalyst component for use in each catalyst layer, Pt, if contained in the cathode catalyst, acts as a catalyst for the reduction reaction of oxygen in the gas, whereas Pt or PtRu, if contained in the anode catalyst, acts as a catalyst for the oxidation reaction of hydrogen. Usually, platinum is used in an amount of addition of 0.1 to 1.0 mg/cm$^2$.

The above catalyst component is preferably in a mode in which it is carried on carbon.

The above-described fuel cell membrane electrode is sandwiched between gas diffusion layers comprising a conductive porous material, and separators having gas supply grooves are disposed outwardly of the gas diffusion layers to constitute a cell. A plurality of such cells are stacked via the separators, whereby a fuel cell body can be produced. The structure of the fuel cell body according to the present invention is not limited, but can be in a mode in which many (for example, 10 to 200) of the cells are stacked to constitute a cell stack. Each cell is adapted to be suppliedwith a hydrogen-containing gas and an oxygen-containing gas. Each cell usually has a structure in which the membrane electrode comprising the anode electrode, thepolymermembrane, andthecathode electrode is sandwiched between the conductive porous materials called the gas diffusion layers, and the resulting composite is further sandwiched between the separators having the gas supply grooves. If necessary, cooling water channels are provided between the separators or within the separators. Within each cell, the gases need to be supplied uniformly from the gas supply grooves. Two lines are present as gas lines. One of the gas lines is a line through which the hydrogen-containing gas is supplied and discharged, and the other gas line is a line through which the oxygen-containing gas is supplied and discharged.

Various methods can be named for preparing the fuel cell electrocatalyst, and no limitation is imposed on the methods. However, if the fuel cell electrocatalyst contains a carrier component, for example, the following preparation method is named: Examples of the carrier component are, but not limited to, a conductive porous substance powder, and a carbon-based powder. Examples of the carbon-based powder are graphite, carbon black, and a powder of activated carbon or the like having electrical conductivity.

The method of carrying platinum or other active metal component on the carrier component, such as carbon, is not limited, but preferably, is powder mixing (solid phase mixing) or liquid phase mixing. An example of the liquid phase mixing is to disperse a carrier, such as carbon, in a colloidal solution of the catalyst component to adsorb the colloidal solutionof the catalyst component onto the carrier. If desired, platinum or other active metal component can be carried on the active oxygen removing material as a carrier in the same manner as described above. The state where platinum or the like is carried on the carrier is not limited, but is preferably a finely divided, highly dispersed carried state.

The method of producing a fuel cell electrocatalyst layer with the use of the so prepared electrocatalyst can be performed in various manners, and is not limited. Concretely, the following method of preparation is named, for example:

The resulting cathode electrode catalyst, a solid polymer electrolyte solution, and a solvent such as ethanol are used to prepare a slurry for a cathode electrode. A separately prepared anode electrode catalyst (e.g., PtRu-carried carbon), a solid polymer electrolyte solution, and a solvent such as ethanol are used to prepare a slurry for an anode electrode. If desired, the active oxygen removing material can be mixed with each of the slurries.

In providing the active oxygen removing layer of the present invention, the active oxygen removing material such as a solid acid catalyst is mixed with the solid polymer electrolyte solution to prepare a mixture. A surface of the solid polymer membrane (for example, a product of Du Pont under the trade name of Nafion Membrane), on which the active oxygen removing layer is to be provided, is coated with the above mixture to form a layer. Then, one surface of the membrane is coated with the slurry for the anode electrode, and the other surface of the membrane is coated with the slurry for the cathode electrode to prepare a membrane electrode.

The gas diffusion layers, such as carbon paper, are stuck to both surfaces of the membrane electrode, and they are sandwiched between the separators to obtain a single cell type polymer electrolyte fuel cell. According to the present invention, this single cell is provided with a cooling device, etc., if desired, and two or more of the single cells are stacked to constitute a fuel cell stack.

Example 1

A fuel cell component cell according to the embodiment of the present invention was prepared, and its performance was evaluated.

A $TiO_2$ powder (trade name: ST-01, ISHIHARA SANGYO KAISHA) was added to a cation exchange polymer solution (5% Nafion (registered trademark), Du Pont) with the use of ethanol as a solvent such that the volume ratio of the solids when dry would be 1:1, thereby preparing a mixture (A). The mixture (A) was coated onto all of one surface of a perfluorosulfonate resin membrane (trade name: Nafion 112, Du Pont) as an electrolyte membrane such that the thickness of an active oxygen removing layer would be 15 $\mu$m, whereby the active oxygen removing layer was formed on the surface of the electrolyte membrane.

Carbon black having 45% by weight of platinum-based catalyst particles with an average particle diameter of 3 nm carried thereon (cathode catalyst), and carbon black having 54% by weight of platinum/ruthenium-based catalyst particles with an average particle diameter of 3 nm carried thereon (anode catalyst) were used as catalysts for a cathode electrode and an anode electrode, respectively. An atmosphere for each of such catalyst powders was purged with $N_2$, and then each catalyst powder was mixed with a perfluorosulfonate resin solution (trade name: SE-5112, Du Pont) such that the ratio of carbon black to dry perfluorosulfonate resin would be 1.0:0.8 (weight ratio, anode electrode) and 1.0:1.0 (weight ratio, cathode electrode). Then, ethanol was added, and the resulting mixture was dispersed over a predetermined period of time with the use of an ultrasonic cleaning device to prepare a slurry. The ultrasonic cleaning device, used in preparing the slurry, was mounted with a container accommodating the slurry material for the cathode, and a container accommodating the slurry material for the anode, and the surroundings were held at 0°C with iced water.

Then, the perfluorosulfonate resin membrane, as the electrolyte membrane, having the active oxygen removing layer formed thereon, was kept at apredetermined temperature (60°C).

Then, the catalyst component-containing slurry prepared in the aforementioned manner was coated on the surface of the electrolyte membrane, where the active oxygen removing layer had been formed, to form a cathode catalyst layer. Subsequently, an anode catalyst layer was formed on the surface of the electrolyte membrane which was free from the active oxygen removing layer. In this manner, a fuel cell component cell, as an electrolyte membrane/electrode assembly, was formed. The amount of the catalyst coated was set at 0.5 mg/cm$^2$ Pt for each of the anode and the cathode.

This assembly was sandwiched between composites to prepare a test sample, each of the composites being composed of a stainless separator and carbon paper placed on the upper surface of the separator, the carbon paper beingrenderedwater-repellentwithtetrafluoroethylene. A durability evaluation test of the test sample was conducted. Each of gas supply portions of the test sample was provided with a temperature controller and a humidifier, and humidity-controlled gases were introduced through the gas supply portions.

Example 2

A fuel cell component cell, as an electrolyte membrane/electrode assembly, was formed and subjected to a durability evaluation test in the same manner as in Example 1, except that activated carbon (trade name: MAXSORB, Mitsubishi Chemical Corp. ) was used as the active oxygen removing material instead of $TiO_2$ used in Example 1.

Example 3

$Ti(O\text{-}iC_3H_7)_4$ (337.6 g) as a Ti source, and 17.3 g of $Si(OC_2H_5)_4$ as a Si source were mixed, and added to 4.4 liters of water at 80°C for hydrolysis. The mixture was stirred for 2 hours in water at the same temperature for aging. The resulting sol was filtered, thoroughly washed to remove the resulting alcohol, and dried. Then, the residue was heated for 5 hours at 500°C for calcination to obtain a compound oxide $TiO_2\text{-}SiO_2$. A fuel cell component cell, as an electrolyte membrane/electrode assembly, was formed and subjected to a durability evaluation test in the same manner as in Example 1, except that the compound oxide $TiO_2\text{-}SiO_2$ was crushed and used as the active oxygen removing material instead of $TiO_2$ used in Example 1.

Example 4

A fuel cell component cell, as an electrolyte membrane/electrode assembly, was formed and subjected to a durability evaluation test in the same manner as in Example 1, except that a $Co_3O_4$ powder (a product of Kojundo Chemical Laboratory) was used as the active oxygen removing material instead of $TiO_2$ used in Example 1.

Example 5

In the present example, there was prepared a fuel cell component cell in which the active oxygen removing layer was not provided, but the active oxygen removing material was contained only in the cathode catalyst layer.

The components were mixed such that the ratio of carbon black, dry perfluorosulfonate resin, and $TiO_2$ would be 1.0:2.0:1.0 (volume ratio). Then, ethanol was added, and the resulting mixture was dispersed over a predetermined period of time with the use of the ultrasonic cleaning device to prepare a slurry for the cathode electrode catalyst. Using this slurry for the cathode catalyst, a fuel cell component cell, as an electrolyte membrane/electrode assembly, was formed and subjected to a durability evaluation test in the same manner as in Example 1.

The durability evaluation test was conducted by introducing a 75% hydrogen gas and air, each of whose predetermined amounts was humidified, into the anode electrode and the cathode electrode, respectively, introducing a nitrogen gas into the cathode as appropriate, and measuring the concentration of the hydrogen gas in the nitrogen gas. If the electrolyte membrane is damaged, it follows that the amount of leakage of the hydrogen gas into the cathode is increased. The relative humidity at the inlet of the anode and the inlet of the cathode was 13%, and the cell temperature was 85°C.

FIG. 1 shows the results of the durability tests of the fuel cell component cells.

A comparative example in FIG. 1 corresponds to the results of the same experiments conducted with the use of a fuel cell component cell which had the same electrolyte membrane and the same electrocatalysts as in Examples 1 to 5, which was free from the active oxygen removing layer, and which contained no active oxygen removing component in the catalyst layers. The horizontal axis of the graph in FIG. 1 shows the relative times in the Examples based on the time when the amount of leakage of hydrogen of the polymer membrane/electrolyte assembly in the Comparative Example reached 3%. The results showed that when the fuel cell component cell of the present invention was used, the time taken to damage to the electrolyte membrane extended, demonstrating an increase in durability.

As indicated above, the use of the fuel cell membrane electrode according to the present invention makes it possible to continue electrode reactions stably and safely even during a long-term operation of a fuel cell, and markedly improves the durability of the cell. Moreover, the operation of the fuel cell under low-humidification conditions can be performed, and the system efficiency is increased. Thus, the significance of the present invention in industry is remarkable.

While the present invention has been described by the above embodiments, it is to be understood that the invention is not limited thereby, but may be varied or modified in many other ways. Such variations or modifications are not to be regarded as a departure from the spirit and scope of the invention, and all such variations and modifications as would be obvious to one skilled in the art are intended to be included within the scope of the appended claims.

## Claims

1.  A fuel cell membrane electrode having a cathode catalyst layer on one surface of a polymer electrolyte membrane, and an anode catalyst layer on other surface of said polymer electrolyte membrane, said cathode catalyst layer being supplied with an oxygen-containing gas, and said anode catalyst layer being supplied with a hydrogen-containing gas, and **characterized in that**
    an active oxygen removing layer containing an active oxygen removing material is provided on at least one of interfaces between said membrane and said catalyst layers coated on both surfaces of said membrane, and said active oxygen removing material is $Co_3O_4$, $Sb_2O_4$, activated carbon, or a solid acid catalyst.

2.  The fuel cell membrane electrode according to claim 1, **characterized in that** said active oxygen removing layer is provided on said interface between said membrane and said cathode catalyst layer.

3.  The fuel cell membrane electrode according to claim 1 or 2, **characterized in that** said active oxygen removing material is contained in at least one of said catalyst layers.

4.  The fuel cell membrane electrode according to claim 1 or 2, **characterized in that** said active oxygen removing material is contained in said cathode catalyst layer.

5.  A fuel cell membrane electrode having a cathode catalyst layer on one surface of a polymer electrolyte membrane, and an anode catalyst layer on other surface of said polymer electrolyte membrane, said cathode catalyst layer being supplied with an oxygen-containing gas, and said anode catalyst layer being supplied with a hydrogen-containing gas, and **characterized in that**
    an active oxygen removing material is contained in at least one of said catalyst layers coated on both surfaces of said membrane, and said active oxygen removing material is $Co_3O_4$, $Sb_2O_4$, activated carbon, or a solid acid catalyst.

6.  The fuel cell membrane electrode according to claim 5, **characterized in that** said active oxygen removing material is contained in said cathode catalyst layer.

7.  The fuel cell membrane electrode according to any one of claims 1 to 6, **characterized in that** said active oxygen removing material is a solid acid catalyst.

8.  The fuel cell membrane electrode according to claim 7, **characterized in that** said solid acid catalyst has 0.1 mmol/g or more of acid sites.

9.  The fuel cell membrane electrode according to claim 8, **characterized in that** said solid acid catalyst comprises $TiO_2$, $SiO_2$, $ZrO_2$, $Al_2O_3$, $WO_3$, niobic acid, or a compound oxide containing at least one of these compounds.

10. The fuel cell membrane electrode according to any one of claims 1 to 6, **characterized in that** said active oxygen removing material has an electrocatalyst metal carried thereon.

11. A fuel cell composed of a stack of cells, each of said cells comprising:

    the fuel cell membrane electrode according to any one of claims 1 to 10;

gas diffusion layers sandwiching said membrane electrode and comprising a conductive porous material; and separators disposed outwardly of said gas diffusion layers and having gas supply grooves.

EP 1 562 247 A1

# FIG. 1

**European Patent Office**

## EUROPEAN SEARCH REPORT

Application Number

EP 05 29 0194

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| P,X | US 2004/043285 A1 (NAGOSHI KENTARO ET AL) 4 March 2004 (2004-03-04) * paragraph [0019] * * paragraph [0023] - paragraph [0029] * * paragraph [0045] - paragraph [0056]; claims 1-39 * | 1,5 | H01M8/10 H01M4/86 |
| X | US 2003/008196 A1 (WESSEL HELGE ET AL) 9 January 2003 (2003-01-09) * paragraph [0010] - paragraph [0012] * * paragraph [0015] - paragraph [0027] * * paragraph [0050]; claims 1-9 * | 1-7,9,11 | |
| X | US 6 335 112 B1 (ASUKABE MICHIO ET AL) 1 January 2002 (2002-01-01) * column 1, line 50 - column 2, line 16 * * column 3, line 55 - column 4, line 60 * * column 6, line 25 - line 35 * | 1-7 | |
| X | PATENT ABSTRACTS OF JAPAN vol. 2000, no. 21, 3 August 2001 (2001-08-03) & JP 2001 118591 A (TOYOTA CENTRAL RES & DEV LAB INC), 27 April 2001 (2001-04-27) * abstract * | 1,5 | TECHNICAL FIELDS SEARCHED (Int.Cl.7) H01M |
| A | US 2003/166824 A1 (SASAKI SHIGERU ET AL) 4 September 2003 (2003-09-04) * the whole document * | | |

The present search report has been drawn up for all claims

| Place of search | Date of completion of the search | Examiner |
|---|---|---|
| Munich | 18 May 2005 | Wiedemann, E |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.** EP 05 29 0194

This annex lists the patent family members relating to the patent documents cited in the above-mentioned European search report.
The members are as contained in the European Patent Office EDP file on
The European Patent Office is in no way liable for these particulars which are merely given for the purpose of information.

18-05-2005

| Patent document cited in search report | | Publication date | Patent family member(s) | | Publication date |
|---|---|---|---|---|---|
| US 2004043285 | A1 | 04-03-2004 | JP<br>JP | 2004087318 A<br>2004087320 A | 18-03-2004<br>18-03-2004 |
| US 2003008196 | A1 | 09-01-2003 | DE<br>CA<br>EP<br>JP | 10130828 A1<br>2390299 A1<br>1271682 A2<br>2003086188 A | 16-01-2003<br>27-12-2002<br>02-01-2003<br>20-03-2003 |
| US 6335112 | B1 | 01-01-2002 | JP<br>DE | 2000106203 A<br>19946694 A1 | 11-04-2000<br>15-06-2000 |
| JP 2001118591 | A | 27-04-2001 | NONE | | |
| US 2003166824 | A1 | 04-09-2003 | JP<br>CA<br>CN<br>DE<br>FR<br>GB<br>JP | 2003206402 A<br>2416580 A1<br>1432604 A<br>10301063 A1<br>2834716 A1<br>2386375 A<br>2003282096 A | 22-07-2003<br>15-07-2003<br>30-07-2003<br>04-09-2003<br>18-07-2003<br>17-09-2003<br>03-10-2003 |

For more details about this annex : see Official Journal of the European Patent Office, No. 12/82